Europäisches Patentamt

(19) European Patent Office

Office européen des brevets

(11) Publication number: **0 061 545**

A2

(12) **EUROPEAN PATENT APPLICATION**

(21) Application number: **81301374.5**

(22) Date of filing: **30.03.81**

(51) Int. Cl.³: **A 21 D 13/08**
**A 21 D 10/04, A 21 B 5/02**
**A 21 C 5/04**

(43) Date of publication of application:
**06.10.82 Bulletin 82/40**

(84) Designated Contracting States:
**AT CH DE FR GB IT LI NL SE**

(71) Applicant: **LICENCIA TALALMANYOKAT ERTEKESITÖ VALLALAT**
**Bajcsy-Zsilinszky Ut, 16**
**H-1368 Budapest(HU)**

(72) Inventor: **Ziegler, Janos**
**15/B, Battai u.**
**Budapest II(HU)**

(74) Representative: **Hartley, David et al,**
**c/o Withers & Rogers 4 Dyer's Buildings Holborn**
**London, EC1N 2AJT(GB)**

(54) **A method and apparatus for the production of waffles.**

㊗ A method of producing waffles, mainly cheese waffles, in which portions of the waffle mixture are baked between baking plates, which form only the sides of the waffle, leaving the edges free.

The waffles are produced using apparatus having heatable pairs of baking plates (2) each with a functional surface forming the side of the waffle but the edges of the waffle are left free (i.e. undefined). A conveying device (1) advances the baking plates around an endless path, to which the lower baking plates (2b) are fixed, the upper baking plates (2a) co-operating with opening and closing cam means (3, 5) at particular positions along the path. Between the opening and closing cam means is a waffle removing unit (7) coacting with the lower baking plates and a waffle mixture feeding device (6) is arranged after the removing unit (in the direction of movement of the baking plates) for dispensing a measured portion of waffle mixture onto the lower baking plate.

-1-

A METHOD AND APPARATUS FOR THE PRODUCTION OF WAFFLES

The invention relates to a method of and apparatus for producing waffles, especially cheese waffles.

As it is known regularly trimmed waffles are generally produced from a liquid batter of flour fats and water or milk, which after suitable mixing  portioned mostly by hand - is placed on heated metal plate.  The batter portion is pressed by a further heated metal plate from above and this way it is squashed to the shape (pattern) formed in the metal plates.  The batter portion is kept pressed between the two metal plates (baking irons) until the waffle is baked.  When the baking irons are opened up the waffles are removed by hand.

Generally waffles are baked on baking irons arranged on stands in several lines.  The waffle maker passing between the lines of waffle irons opens the upper part of the waffle-iron by hand and removes the baked and trimmed waffle by hand, or hand tool, then pours in the next batter portion with spoon and closes the upper and lower part of the baking iron.  From this it follows that a single waffle-maker is capable to handle as many baking-irons that by the time the last one is filled up with batter, the waffle is already baked in the first one.

Conventional techniques of waffle making are inefficient involving much manual work. Also it is often difficult to remove a leaked waffle from the baking irons which define a regular edge, since the waffles tend to stick to the baking plates or irons.

One object of the present invention is to overcome these disadvantages.

More particularly, it is an object of the invention to increase the productivity of the waffle baking, reduce manual work to the minimum, and facilitate removal of the baked waffles.

According to one aspect of this invention we propose a method of producing a waffle wherein waffle mixture is baked between baking plates characterised in that only the sides of the waffle mixture and hence the resulting waffle are formed by contact with the baking plates, leaving the edges of the waffle undefined.

The method of the invention is particularly suited to the production of cheese waffles but any waffle mixture can be used.

Preferably the waffle mixture is prepared by mixing eggs, milk, melted cheese and optionally flavouring additives or seasoning, are mixed to homogeneous mixture, then flour and fats are added during continued mixing, then with the addition of liquid, preferably milk, it is diluted to the required thickness.

According to another aspect of this invention we propose apparatus for producing waffles, comprising one or more sets of baking plates which are movable between a closed position for baking and an open position for feeding waffle mixture therein, characterised in that the baking plates have a functional surface for contact with the sides of the waffle, but leave the edges of the waffle undefined.

A preferred embodiment of the apparatus according to the invention has a device for conveying the baking plates along an endless path, to which the lower baking plates of the baking iron are fixed. The upper baking plates co-operate with opening cam means at one part of the endless path and with closing cam means in another part of the path. Between the closing and opening cam means is a waffle removing unit and a waffle mixture feeding device is arranged after (in the direction of movement) the removing unit which device dispenses measured portions of mixture onto the lower baking plate..

The conveying device is preferably a horizontal disc, around which the baking irons are equally angularly spaced and the upper baking plates may turn up at their outer ends.

For keeping the baking plates closed during movement between the opening and closing cam means, a locking unit is providid.

The waffle removing unit may comprise a slanting removing plate coacting with the functional surface of the lower baking plates arranged on stationary supporting bar moving against spring contrary to the direction of the baking irons.

The apparatus is provided suitably with such end unit in the vicinity of the end part of the closing cam which forces the locking unit into locking position.

The waffle mixture feeding device preferably comprises a horizontal cylinder rotatably arranged within a cylindrical sleeve, said cylinder having at least one diametrical channel therethrough in which a piston-like feeding element is easily slidable. The length of this element is less than the diameter of the cylinder and the cylindrical sleeve has diametrically opposed inlet and outlet openings which are aligned with the ends of the channel at a particular angular postion of the cylinder. The inlet opening of the sleeve communicates with a supply of waffle mixture and the outlet opening thereof is smaller in diameter than the piston-like element.

The following is an example of a suitable mixture for making cheese waffles:

25 eggs mixed with milk and warmed to $35^{o}C$ is poured into a mixing dish, then spices mixed in advance are sifted in. This is followed by pouring 1 kg cheese melted with $90^{o}C$ water into the mixing dish. A homogeneous mixture is produced by mixing for a few minutes. Then during continuous mixing 8 kg sifted flour is added to the mixture. The so-obtained basic material is fairly hard and pasty. It is mixed to even uniform consistency, then during continuous mixing fats melted in advance at $70^{o}C$, in this case 0.5 kg margarine is added with care. When the fats are completely mixed, the paste is diluted to the required thickness by gradually adding 8 litre lukewarm milk. A few minutes after mixing - while 0.3 kg salt is added to the paste - the waffle mixture is ready for use.

One embodiment of the invention will now be described by way of example with reference to the accompanying drawings of which:-

Figure 1 is a diagrammatic plan view of apparatus according to the invention;

Figure 2 is a perspective view showing a detail of the apparatus of Figure 1 to a larger scale;

Figure 3 is a perspective view showing a further detail of the apparatus of Figure 1 to a larger scale;

Figure 4 shows to a larger scale a baking plate locking unit;

Figure 5 is a view on arrow V in Figure 4; and

Figure 6 is a section along line VI-VI in Figure 1 (to a larger scale).

The waffle producing apparatus according to the invention has baking irons 2 consisting of upper 2a and lower baking plates 2b driven on endless path by a device to which lower baking plates 2b of the baking irons 2 are fixed. In the case of the present embodiment the device forwarding the baking irons 2 on endless path has a circular disc 1 the direction of rotation of which is marked with arrow C. In this case rotation of the disc 1 is intermittent, i.e. after a fixed turn the disc 1 stops for a short while, followed by a further path section. Such rotation of the disc 1 is carried out by a conventional gear, e.g. Geneva gear 50 connected with a driving unit 51. The gear 50 drives a vertical shaft 52 of the disc 1 through a conventional reducing gear (not shown).

0061545

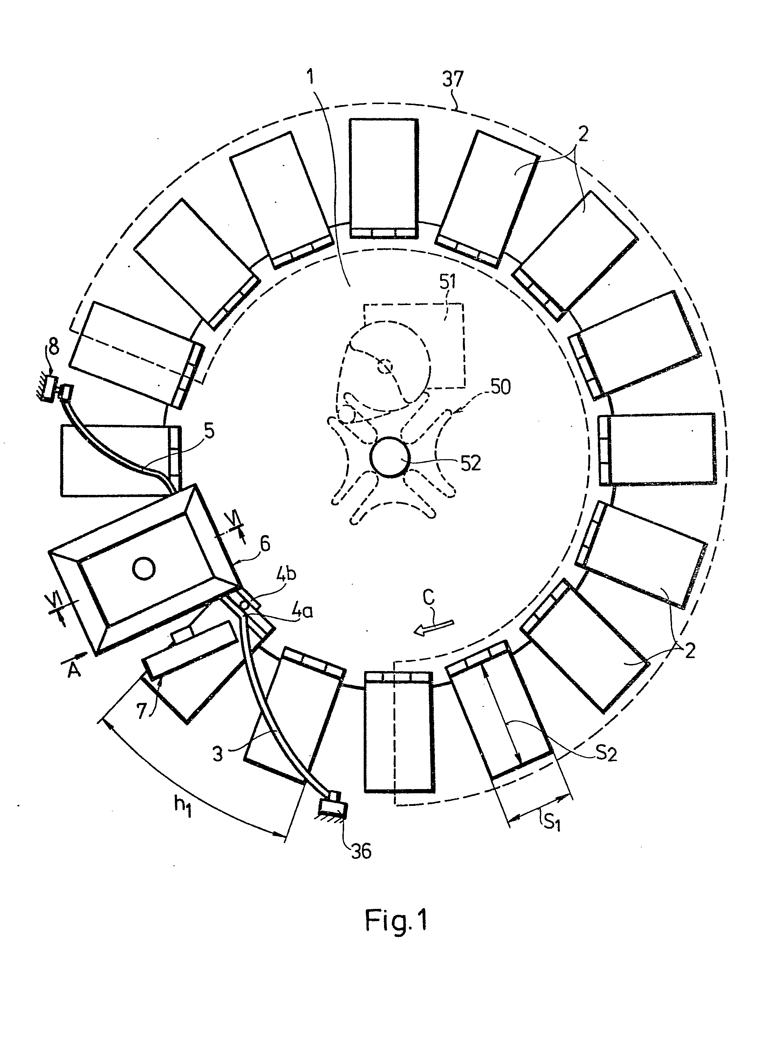

As shown in Figure 1 the baking irons 2 on the disc 1 are radially arranged and move in direction <u>C</u> together with the intermittent rotation of the disc 1. Along the path of motion of the baking irons 2 in the direction C opening element 36, opening cam 3 following each other, guide rails 4a and 4b parallel with each other, closing cam 5 and end unit 8 are arranged. Above the path of motion of the baking--irons 2 in the vicinity between the opening cam 3 and closing cam 5 a feeding device 6 passing the batter portion onto the baking plates 2b while in front of it a waffle removing unit 7 coacting with the lowar baking plates 2b are arranged.

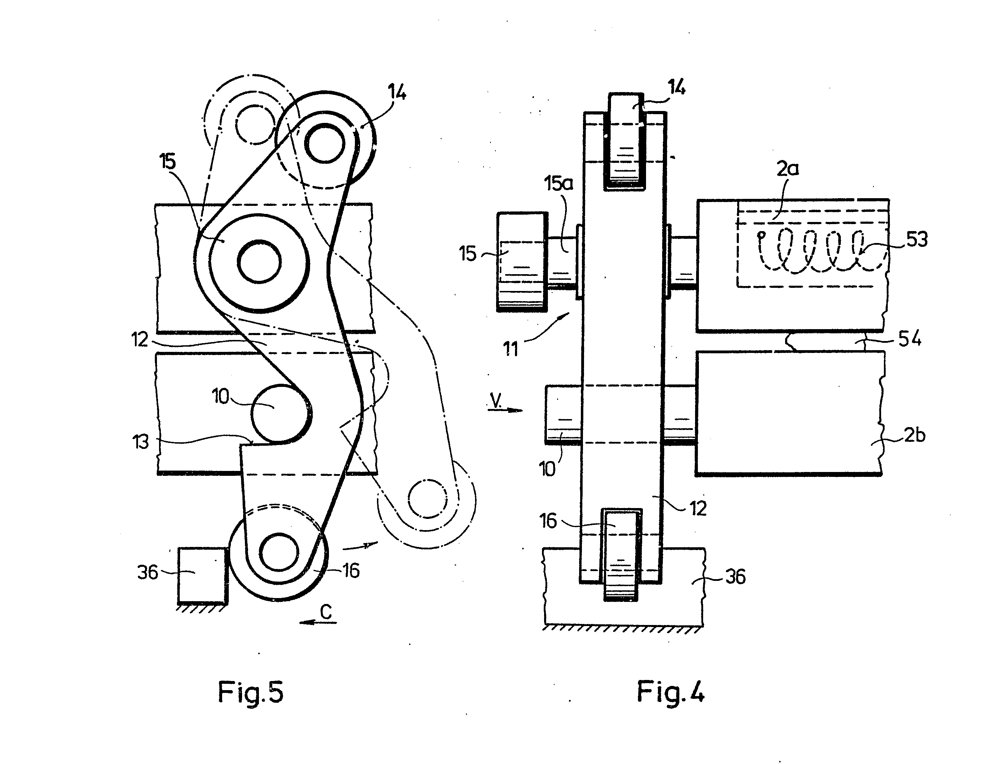

The baking irons 2 are heated in conventional manner for instance with heating wire 53 arranged in the upper baking plate 2a (Figure 4) which during operation of the apparatus is connected to the mains (this is not shown separately). However heating of the baking irons 2 may be also solved as shown in Figure 1. Here a baking duct 37 is shown with dashed line, the baking irons 2 passing through. Heating of the heating duct 37 can be solved by any conventional method with electric or oil or gas heating.

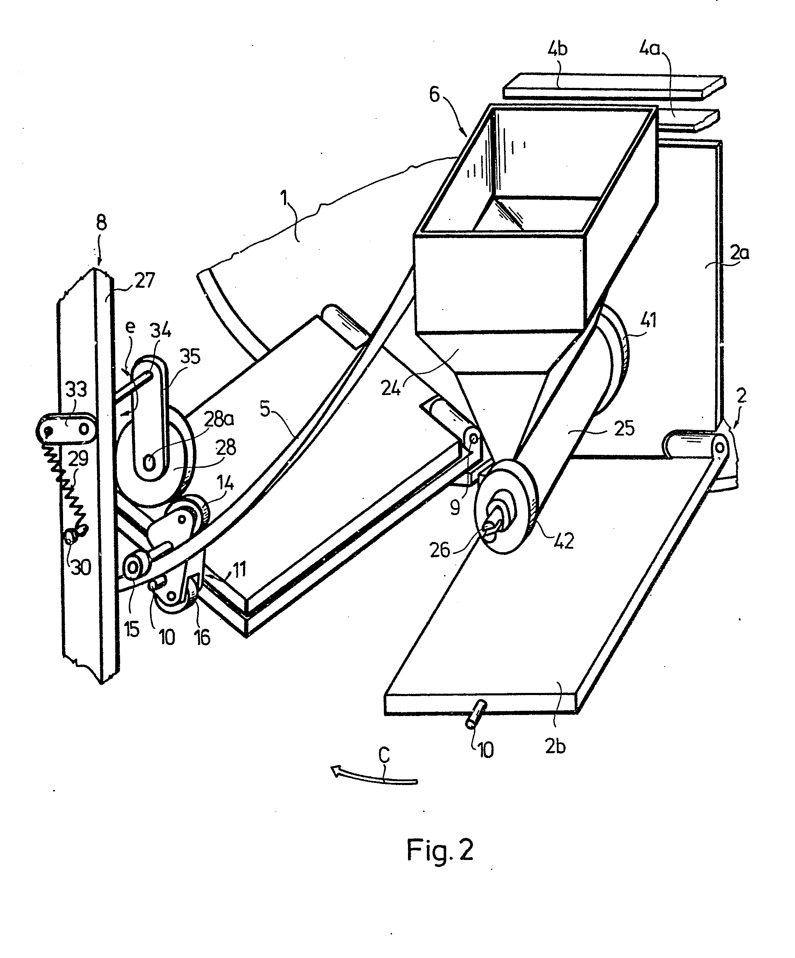

Figure 2 shown the perspective view of certain details of the apparatus according to the invention, namely the feeding device 6 and the end unit 8 in a relatively larger scale. As already mentioned above each baking iron 2 consists of a lowar baking plate 2b and upper baking plate 2a. The lowar baking plates 2b are rigidly fixed to the disc 1, while the upper baking plates 2a are hinged through pins 9 to the lowar baking plate 2b and can be turned up by their outer edge. The upper baking plate 2a in its turned down, i.e. baking position is parallel with the corresponding lower baking plate 2b, having a gap between them suited to the thickness of the cheese waffle. The upper baking plate 2a in its open turned up position is perpendicular to the lower baking plate 2b. A pin 10 extends from the centre of the outer plate of the lower baking plate 2b being in coaction with a locking unit 11 turnably embedded on the outer plate of the upper baking plate 2a. Details of the locking unit 11 are shown in Figures 4 and 5.

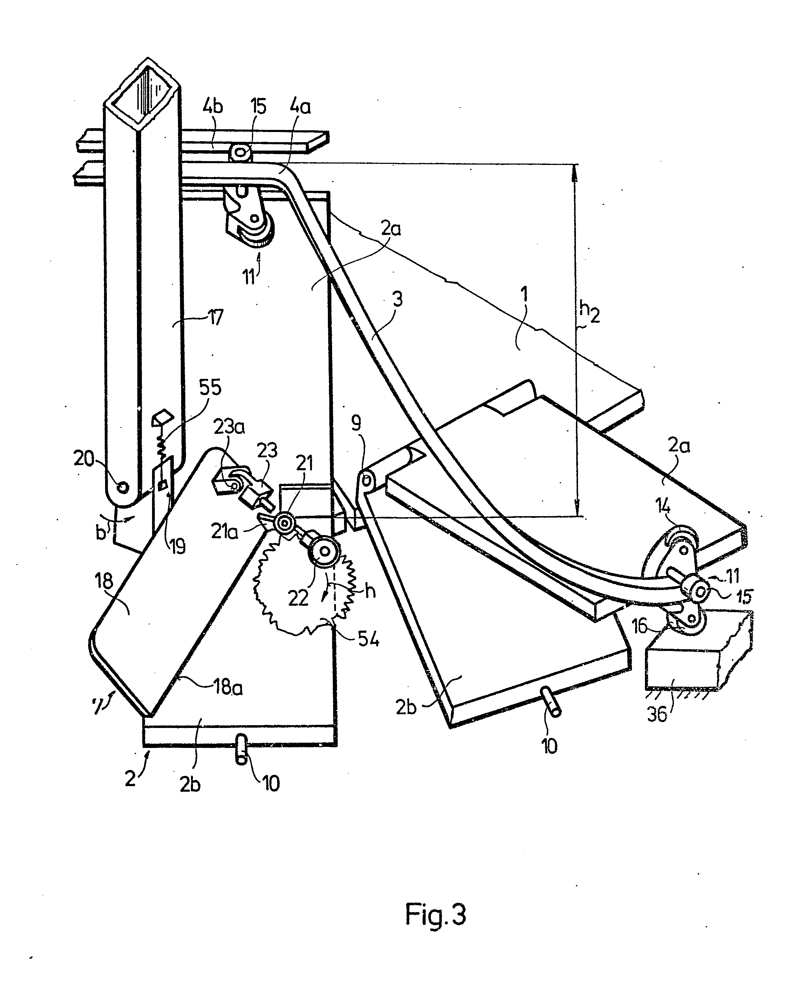

Figure 3 illustrates further details of the apparatus shown in Figure 1 in perspective view drawn to a relatively larger scale. The removing unit 7 is arranged after the opening element 36 looking in the direction of progress C. This in the present case has a slanting removing plate 18 coacting with the functional surface of the lower baking plates 2b, arranged tiltably against a compression spring 55 on a stationary supporting bar 17. An arm 19 - the movement of which is indicated by arrow b - is hinged with a pin 20 to the lower end of the supporting bar 17. The removing plate 18 is rigidly fixed to the lower end of the arm 19. Purpose of the compression spring 55 is to press the removing plate 18 onto the lower baking plate 2b. The removing plate 18 has a removing edge 18a whereby a baked cheese waffle 54 is removed from the lower baking plate 2b.

In the illustrated case the removing plate 18 is provided with a guide roller 21 extending counter to direction C. The guide roller 21 is turnably embedded on a supporting plate 21 and rigidly fixed to the removing plate 18. Purpose of the guide roller 21 is to guide the removing plate 18 onto the baking plate 2b. For this purpose the guide roller 21 is arranged on the removing plate 18 in such a way as to have its lower part in the same plane with the removing edge 18a.

Furthermore, the removing plate 18 is provided with a tipping roller 22, hinged through an arm 23 and a pin 23a to the removing plate 18. Purpose of the tipping roller 22 is to tip over the baked cheese waffle 54 from the lower baking plate 2b in the direction of arrow h. The tipping roller 22 bears up on the lower baking plate 2b by its own deadweight and by the weight of arm 23.

Details of the locking unit 11 are clearly shown in Figures 4 and 5. A handle 12 of the locking unit 11 is embedded freely turnably on a pin 15a of the upper baking plate 2a. Purpose of the locking unit 11 is to keep the upper baking plate 2a and lower baking plate 2b from end of the closing cam 5 to the front part of the opening cam 3 in closed baking position. The handle 12 of the locking unit 11 is provided with rollers 14 and 16 on the top and bottom, which rollers in baking position extend upwards and downwards over the upper baking plate 2a and lower baking plate 2b. The pin 15a is above the centre of gravity of the handle 12, as a result of which the locking unit 11 tipping out of its state of equilibrium tries to swing back by its own weight into the state of equilibrium shown in Figure 5, i.e. it is self-closing. In this case the roller 16 is in its deepest position. The handle 12 at its part below the pin 15a is provided with a lateral recess 13 to receive the pin 10 of lower baking plate 2b and retaining it during the time of the baking. The pin 15a on its part extending over the locking unit 11 is provided with a guide roller 15 rolling on the cams 3 and 5. Distance of the guide rails 4a and 4b from each other connecting the cams 3 and 5 is selected to be suitable for the guide roller 15 passing through between them (Figure 3.).

Figure 5 clearly shown that the locking unit 11 is opened upon impact of the locking unit's 11 roller 16 on the stationary opening element 36. While the baking iron 2 is turned in the direction of arrow C, the locking unit 11 turns around the pin 15a into its opening position shown by dash and dot line, while the recess 13 releases the pin 10 of the upper baking plate 2a.

Details of the end unit 8 are shown in Figure 2. It has an end roller 28 embedded freely turnably around a pin 28a. The pin 28a is fixed to a tipping arm 35. The tipping arm 35 is rigidly fixed to a pin 34 led through the not illustrated hole of a stationary supporting bar 27. One end of the tipping arm 33 is connected to the other end of the pin 34. A spring 29 is connected to the free end of tipping arm 33, the other end of which is connected to a lock pin 30 fixed to the supporting bar 27.

Thus the end roller 28 can be turned around the pin 34 against the spring 29 in the direction of arrow e. The end roller 28 is in coaction with the roller 14 of the locking unit 11. At juncture of the end roller 28 and the roller 14 (this position is shown in Figure 2.) the locking unit 11 is turned by the end (closing) unit 8 around the pin 15a into the locking position (shown in Figure 5.).

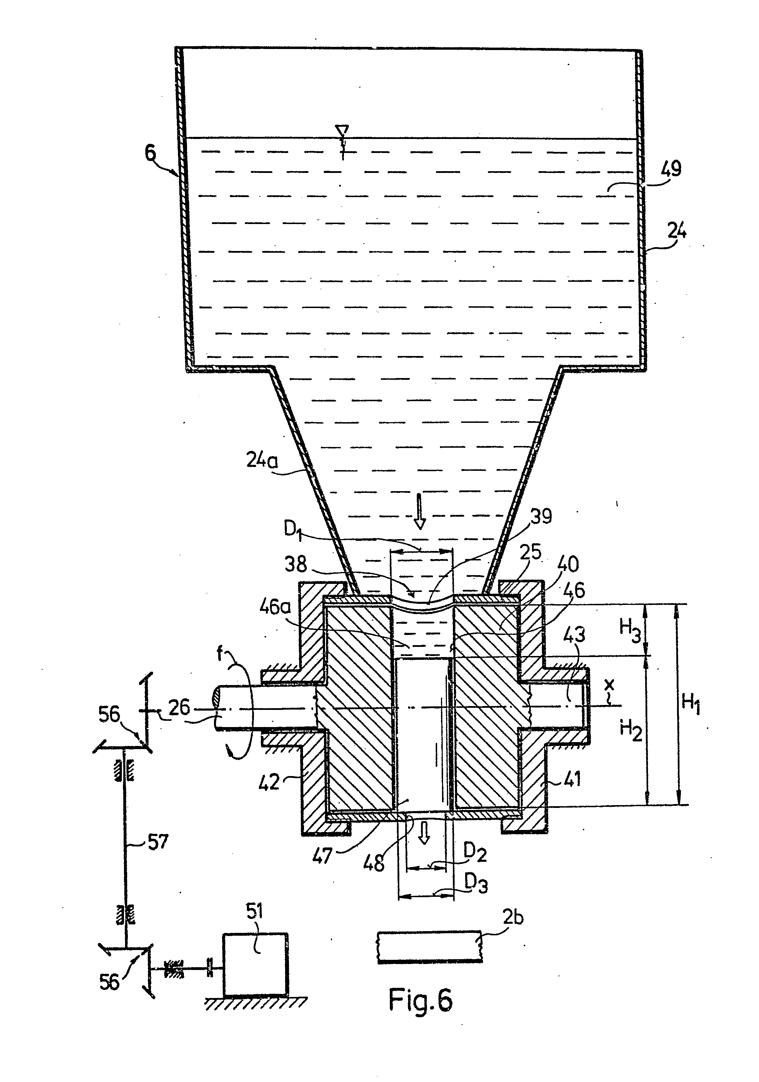

A preferred embodiment of the feeding unit 6 is described in detail on the basis of Figures 2 and 6 where Figure 6 illustrates the section taken along line VI-VI according to Figure 1. This has a horizontal cylinder 40 rotatably arranged in the cylindrical house. The cylinder 40 is provided with a single through opening 46 in this case, passing in radial direction. A piston-like feeding element 47 is movably arranged in the opening 46, the $H_2$ length of which is selected to be less than the $H_1$ diameter of the cylinder 40. The house in the illustrated case consists of a cylinder jacket 25 and end discs 41 and 42 threaded to the end of the cylinder jacket 25. Shaft stubs 26

- 12 -

0061545

and 43 of the cylinder 40 are bearing supported and sealed in the end discs 41 and 42. The cylinder jacket 25 is provided with an inlet opening 39 connectible with the opening 46 of the cylinder 40 - at suitable turn of the cylinder 40 - and with an outlet opening 48, which are arranged diametrically opposite each other and their centreline common with the centreline of the opening 46 is in the same plane. The inlet opening 39 is connected to an outlet 38 of a hopper 24a of a raw material container 24. In the present case the raw material container 24 is rigidly fixed to the cylinder jacket 25. In the present case the diameter $D_2$ of the outlet opening 48 is selected to be less than the diameter $D_3$ of the feeding element 47 formed as a cylindrical piston. This way the feeding element 47 is prevented from falling out of the opening 46. Diameter $D_1$ of the inlet opening 39 in this case coincides with the diameter of the opening 46.

The shaft stub 26 of the cylinder 40 in the illustrated case is in driving connection through a bevel gear pair 56 and an intermediate shaft 57 with the central driving unit 51 of the apparatus. The axis of cylinder 40 is marked with $\underline{X}$ the thick pasty raw material in the container 24 with 49 and the feeding space receiving the raw material - which represents the remaining part of the opening 46 - is marked with reference number 46a. Height of the feeding space 46a is marked with reference character $H_3$, the volume of which selected to be suitable for receiving a portion of raw material necessary for one cheese waffle. The feeding element 47 is formed from metal, in this case from bronze and its diameter is selected to be suitable for freely moving in the opening 46 by its own deadweight during the 180° rotation of the cylinder 40 in the direction f, and meanwhile to forward the raw material portion in the feeding space 46a through the outlet opening 48 onto the lower baking plate 2b.

Operation of the waffle baking apparatus according to Figures 1 - 6 is the following:

After filling up the raw material container 24 of the feeding device 6 with thick pasty batter, the central driving unit 51 is switched on, which rotates the disc 1 intermittently through gear 50 in the direction of arrow C. Consequently the cylinder 40 of the feeding device 6 is also driven through the bevel gear pair 56 and shaft 57. Speed of the cylinder 40 is synchronized with the intermittent rotation of disc 1 in such a way, that during the time necessary for 180° turn of the feeding cylinder 40 always a new lower baking plate 2b of the baking iron 2 appears under the outlet opening 48 and the lower baking plate 2b remains stationary until the feeding element 47 feeds the raw material portion from the feeding space 46a through the outlet opening 48 onto the lower baking plate 2b. (Figure 2.).

Upon completion of the feeding the baking iron 2 with the portioned raw material will be passed out from under the feeding device 6 at the next intermittent turn of disc 1. Meanwhile the guide roller 15 of the upper baking plate 2a passes between the guide rails 4a and 4b onto the closing cam 5. The closing cam 5 forces the upper baking plate 2a downwards by the guide roller 15. The cam 5 is formed as such spatial curve, the vertical projection height of which is actually the same as the length $s_2$ of the upper baking plate 2a, while the horizontal projection length coincides with the width $s_1$ of the baking iron 2. (Fig. 1.). Thus the closing cam 5 forces the upper baking plate 2a to close the corresponding lower baking plate 2b. Meanwhile the raw material portion on the lower baking plate 2b is flattened by the upper baking plate 2a. At the end of the closing cam 5 the roller 14 of the locking unit 11 impacts on the end roller 28 of the end unit 8 (Fig. 2.), as a result of which the locking unit 11 gets into the position marked with continuous line in Figure 5., when the recess 13 receives and retains the pin 10 of the upper baking plate 2a. This way the baking plates 2a and 2b are locked to each other.

The baking begins as soon as the baking plates are closed, since the current is transmitted to the heating wires 53 when the apparatus is switched on, i.e. the upper baking plates 2a are constantly heated to 160°C. Size of the disc 1 and speed of its intermittent rotation are selected so that by the time the baking iron 2 arrives at the opening element 36, the cheese waffle will be baked.

Locking of the upper 2a and lower baking plate 2b is released by impact of the lower roller 16 of the locking unit 11 on the opening element 36, whereby during turn of the disc 1 in the direction $C$ the locking unit 11 gets into the open position shown by the dash-dot line in Figure 5. In this position the pin 10 of the upper baking plate 2a is released by the recess 13 of the handle 12. This is followed by the guide roller 15 of the locking unit 11 passing upwards on the opening cam 3, while the upper baking plate 2a gets into the turned up, i.e. open position. The horizontal projection length $h_1$ of the opening cam 3 (Fig. 1.) its projection height $h_2$ (Fig. 3.) and its spatial position are selected so that when the upper baking plates 2a reach the end of the opening cam 3 they will be in vertical position.

In the process of the experiments conducted with the above apparatus it appeared to be suitable to select the value $h_1$ as to be equal with twice the width $s_1$ of the baking iron 2 plus the clearance between the baking irons 2, furthermore the $h_2$ value may be preferably identical with the lengths $s_2$ of the baking irons 2.

When the roller 15 of the upper baking plate 2a is between the guide rails 4a and 4b, the corresponding lower baking plates 2b together with the baked cheese waffle 54 pass into the vicinity of the removing unit 7. In this case the removing edge 18a of the removing plate 18 - set to the height of the upper plane of the lower baking plates 2b - sliding on the lower baking plate 2b pushes the baked cheese waffle 54 off the lower baking plate 2b. Even in case of certain height differences the guide roller 21 assists the guiding of the removing plates 18 onto the lower baking plate 2b. In this case the removing plate 18 may temporarily rise against the spring 55.

As shown in Figure 3 the tipping roller 23 may already bear up on the baked cheese waffle 54, when it is not even in contact with the removing edge 18a. The roller 22 remains or rolls on the surface of the cheese waffle 54 by its deadweight. While the removing plate 18 pushes the cheese waffle 54 off the lower baking plate 2b and thus part of it remains unsupported, the tipping roller 22 turns down the cheese waffle 54 from the lower baking plate 2b in the direction of arrow h and it falls through the gap between the two adjacent baking irons 2 into the collecting box (not shown separately). Thus the tipping roller 22 prevents the cheese waffle 54 removed with the removing plate 18 from being pushed over onto the next lower baking plate 2b.

Returning to the operation of the feeding device 6, in the position shown in Figure 6, the opening 46 of the cylinder 40 is connected with the inlet opening 39 of the cylinder jacket 25. In this case the raw material portion passes from the raw material container 24 through the outlet 38 into the feeding space 46a of the cylinder 40. This is assisted by the suction effect of the feeding element 47 through moving always downwards by its deadweight in the opening 46 during the rotation of cylinder 40. Thus the raw material passes into the feeding space 46a safely and at a fast rate. In the position shown in Figure 6 the feeding space 46a is just full with a portion of raw material.

At further turn of the cylinder 40 in the direction of arrow $f$, the opening 46 of the cylinder 40 is closed by the jacket 25, thus it prevents the raw material from flowing out of the feeding space 46a. After half turn of the cylinder 40 the feeding space 46a is connected with the outlet opening 48 of the cylinder jacket 25, through which the feeding element 47 moving downwards by its own weight pushes the raw material portion out of the feeding device 6 onto the lower baking plate 2b, being just under the outlet opening 48. The downward moving feeding element 47 - as mentioned above - assists the entry of the next raw material portion into the feeding space 46a with its suction effect. Naturally the in- and unloading begin already at the partial overlapping of the corresponding holes. Above process will be repeated cyclically. Thus the cylinder 40 will unload two portions during its rotation of 360° passing onto two consecutive baking plates 2.

Naturally the apparatus according to the invention has several other alternatives and combinations within the protective circle of the invention besides the one described by way of example. Thus for instance the feeding device 6 may feed several portions of raw material and in varying quantity, when several openings 46 and feeding elements 47 are next to each other. Thus several waffles can be baked in each baking iron. Furthermore several raw material containers receiving the raw materials of varying composition can be used, each connected to an inlet opening 39. In addition to above, the form, size and arrangement of the baking irons 2 furthermore the endless path and its drive can be solved by several other conventional methods, this however in knowledge of the present invention is within the province of the experts.

Thus the process according to the invention is suitable for the production of such new product, i.e. irregularly trimmed waffle, e.g. cheese waffle, which can be flavoured at discretion for instance with cheese and salt. It is noted that the irregularly trimmed products entail such significant advantage, that partly there is no loss of raw material, since the complete raw material portion is baked at the serrated, trimmed waffle, and partly the use of template for forming the edge is unnecessary, whereby the risk of sticking is reduced to the minimum and the operational safety is improved. This way the waffle can be flavoured at discretion which is the main assurance of the commercial succes. (It is noted that in so far the "sticking" prevented the flavouring of the waffles with cheese and salt).

Baking of the irregularly trimmed waffle can be fully automated with the proposed apparatus whereby the productivity and economic efficiency will become considerably higher than those of the known solutions. The apparatus can be handled even by a single trained worker. The feeding device 6 is capable for the fast and safe feeding of raw materials of varying consistency (thick cream to thin milk). Operation of the removing unit 7 is similarly safe and automatic.

CLAIMS

1.    A method of producing a waffle wherein waffle mixture is baked between baking plates characterised in that only the sides of the waffle mixture and hence the resulting waffle are formed by contact with the baking plates, leaving the edges of the waffle undefined.

2.    A method according to claim 1 wherein the waffle mixture is prepared by mixing eggs and milk and optionally cheese and/or flavouring additives, flour and fat being added during continued mixing to produce a homogeneous mixture.    ·

3.    Apparatus for producing waffles, comprising one or more sets of heatable, baking plates which are movable between a closed postion for baking and an open position for feeding waffle mixture thereon, characterised in that the baking plates have a functional surface for contact with the sides of the waffle, but leave the edges of the waffle undefined.

4.    Apparatus according to claim 3, comprising a conveying device for advancing the baking plates around an endless path, to which the lower baking plates are fixed, wherein the upper baking plates co-operate at one section of the path with opening cam means and in another section of the path with closing cam means.

5.    Apparatus according to claim 4 and comprising a waffle removing unit disposed between the opening·cam means and closing cam means and a waffle mixture feeding device disposed between the removing unit and the closing cam means, for dispensing a measured portion of waffle mixture onto the lower baking plates.

-2-                                    0061545

6.      Apparatus according to claim 4, characterised in that
the conveying device comprises a circular disc driven by
an intermittent drive, preferably with Geneva gear and
wherein the baking plates are radially arranged on the
disc while the upper baking plates can be turned up at
their outer end.

7.      Apparatus according to claim 3, characterised in that
each set of baking plates has a locking unit retaining
the baking plates in the closed position between the closing
cam means and the opening cam means.

8.      Apparatus according to claim 7, characterised in that
the locking unit has a self-closing handle turning around
a pin fixed to the upper baking plate, which has a
lateral recess in locking connection with an extension
of the lower baking plate when the baking plates are in closed
position.

9.      Apparatus according to claim 7 or claim 8 characterised
in that each upper baking plate has a guide roller rolling
on the opening and closing cam means which is rotatably
embedded on the pin extending over the locking unit of the
upper baking plate.

10.     Apparatus according to any of claims 3 to 9, characterised
in that the removing unit has a slanting removing plate
for co-operation with the functional surface of the lower
baking plates and arranged for movememt against a spring
on a stationary bar.

11. Apparatus according to any one of claims 8 to 10, characterised in that an end unit is provided in the vicinity of the end section of the closing cam means for forcing the locking unit into locking position, the end unit having an element, mainly roller tipping in the direction of movement of the locking unit against a spring arranged in the path of motion in the section of the locking unit above the tipping pin.

12. Apparatus according to claim 5, wherein a horizontal cylinder is rotatably arranged in the feeding device . housing and has at least one diametrical channel therethrough in which a piston-like feeding element is slidably arranged, the length of the piston-like feeding element being less than the diameter of the cylinder, wherein at a suitable angular position of the cylinder the diametral channel therein is aligned at one end with an inlet opening of the feeding device in communication with a supply of the waffle mixture and at the other end, with an outlet opening of the feeding device, which outlet opening is smaller than the piston-like feeding element.

13. Apparatus according to claim 12, wherein the feeding device housing comprises a cylindrical sleeve fitted with end closures in which the cylinder is journalled, the cylinder being connected at one end to a driving unit.

Fig.1

Fig. 2

Fig.3

Fig.5

Fig.4

0061545

Fig.6